# EUROPEAN PATENT APPLICATION

(11) **EP 2 621 181 A2**
(43) Date of publication of application: **31.07.2013**
(21) Application number: 13152360.7
(22) Date of filing: 23.01.2013
(51) Int. Cl.: H04N 21/258, H04N 21/4784

(54) **Coupon distribution system, television device and server**

(30) Priority: 24.01.2012 JP 2012011832
(71) Applicant: Funai Electric Co., Ltd., Daito-shi, Osaka 574-0013 (JP)
(72) Inventor: Yamashita, Hiroya, Daito-shi, Osaka 574-0013 (JP)
(74) Representative: Grünecker, Kinkeldey, Stockmair & Schwanhäusser

(57) **Abstract**

A coupon distribution system includes a television device and a server. The television device acquires program related information of a television program. The television device sends the program related information and a device ID of the television device via a network. The server has a user database that stores for each device a device ID and a device location. The server acquires the device ID of the television device via the network. The server searches in the user database for the device location of the television device based on the device ID of the television device. The server converts service information of a coupon providing store into a code image. The server sends the code image to the television device such that the television device displays the code image on a screen of the television device in response to receiving the code image from the server.

## Description

### CROSS-REFERENCE TO RELATED APPLICATIONS

This application claims priority to Japanese Patent Application No. 2012-011832 filed on January 24, 2012. The entire disclosure of Japanese Patent Application No. 2012-011832 is hereby incorporated herein by reference.

### BACKGROUND

### Field of the Invention

The present invention generally relates to a coupon distribution system. More specifically, the present invention relates to a coupon distribution system having a television device that is configured to receive television broadcasts and be connected to a network, and a server that is configured to be accessed via the network.

### Background Information

Conventionally, coupon distribution systems are known. In one conventional system, coupons are acquired via the Internet (see Japanese Laid-Open Patent Application Publication No. 2003-208381 (Patent Citation 1), for example). In another conventional system, coupons are sent to a mobile device (see Japanese Laid-Open Patent Application Publication No. 2008-3982 (Patent Citation 2), for example). In yet another conventional system, a user's account is settled with electronic money (see Japanese Laid-Open Patent Application Publication No. 2009-145574 (Patent Citation 3), for example).

### SUMMARY

It has been discovered that with the conventional system, such as one discussed in Patent Citation 1, the coupons related to a television program cannot be automatically acquired while this television program is being watched. With the conventional system, such as one discussed in Patent Citation 2, related coupons can be acquired based on position information about a mobile telephone. However, it has been discovered that in practice these coupons cannot be automatically acquired unless the user is near a certain store. With the conventional system, such as one discussed in Patent Citation 3, advertising related to a television program is received while this television program is being watched. However, it has also been discovered that this is merely reflected in the account settlement in the case of electronic money.

One object of the present disclosure is to provide a coupon distribution system with which coupons related to a television program are automatically acquired while the television program is being watched, and the coupons can be easily utilized.

In view of the state of the know technology, a coupon distribution system includes a television device and a server. The television device is configured to receive a television program. The television device is further configured to acquire program related information of the television program that is being received. The television device is further configured to send the program related information and a device ID of the television device via a network. The server is configured to be connected to the television device via the network. The server has a user database that stores for each device a device ID and a device location. The server is further configured to acquire the device ID of the television device via the network. The server is further configured to search in the user database for the device location of the television device based on the device ID of the television device. The server is further configured to convert service information of a coupon providing store into a code image with the coupon providing store being selected based on the device location and the program related information. The server is further configured to send the code image to the television device such that the television device displays the code image on a screen of the television device in response to receiving the code image from the server.

Other objects, features, aspects and advantages of the present disclosure will become apparent to those skilled in the art from the following detailed description, which, taken in conjunction with the annexed drawings, discloses selected embodiments of a coupon distribution system.

### BRIEF DESCRIPTION OF THE DRAWINGS

Referring now to the attached drawings which form a part of this original disclosure:

FIG. 1 is a schematic diagram of a coupon distribution system in accordance with a first embodiment;

FIG. 2 is a schematic diagram of a web application server and a television set of the coupon distribution system illustrated in FIG. 1, illustrating a coupon information response;

FIG. 3 is a flowchart illustrating a coupon distribution of the coupon distribution system illustrated in FIG. 1;

FIG. 4 is a block diagram of the web application server of the coupon distribution system illustrated in FIG. 1;

FIG. 5 is a block diagram of the television set of the coupon distribution system illustrated in FIG. 1;

FIG. 6 is a schematic diagram of a coupon distribution system in accordance with a second embodiment;

FIG. 7 is a flowchart illustrating a coupon distribution of the coupon distribution system illustrated in FIG. 6.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

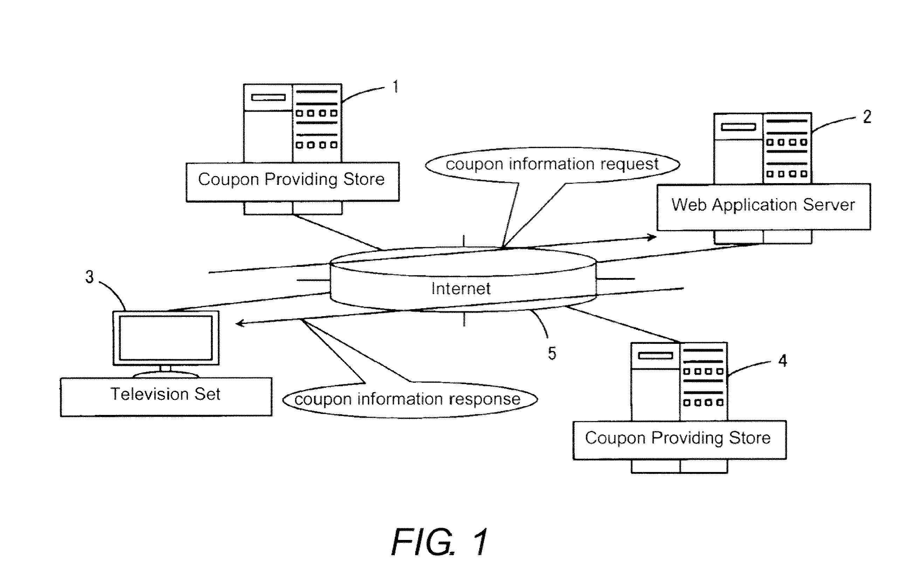

Referring initially to FIG. 1, a coupon distribution system is illustrated in accordance with a first embodiment. The coupon distribution system basically includes a web application server 2 (e.g., a server) with databases, a television set 3 (e.g., a television device), and a network, such as the Internet 5. The television set 3 is owned by a user. The television set 3 is connected to the Internet 5, and offers video on demand (i.e., VOD) and other such services. The main internet services are related to services providing video and music content. Of course, it will be apparent to those skilled in the art from this disclosure that these main internet services do not need to be provided in the coupon distribution system in accordance with the first embodiment. In the illustrated embodiment, coupon information for a viewing locale (e.g., a device location) is provided as an Internet service. The television set 3 receives television programs via television broadcasts, and is connected to the Internet 5. In the illustrated embodiment, only one television set 3 is illustrated in FIG. 1. Of course, it will be apparent to those skilled in the art from this disclosure that a plurality of television sets or devices (or terminals) can be connected to the Internet 5. The web application server 2 is accessed via the Internet 5. As illustrated in FIG. 1, a plurality of coupon providing stores 1 and 4 (e.g., stores or coupon providing stores) are also connected to the Internet 5. The coupon providing stores 1 and 4 and the television set 3 communicate with the web application server 2 through the Internet 5. Referring to FIG. 1, only two of the coupon providing stores 1 and 4 are connected to the Internet 5. Of course, it will be apparent to those skilled in the art from this disclosure that more than two coupon providing stores can be connected to the Internet 5.

The web application server 2 and the television set 3 basically include processing devices that that execute functions as discussed below. The coupon providing stores 1 and 4 also have processing devices. In particular, the processing devices preferably include a microcomputer with control programs that execute the functions as discussed below. The processing devices can also include other conventional components such as an input interface circuit, an output interface circuit, and storage devices such as a ROM (Read Only Memory) device and a RAM (Random Access Memory) device. The microcomputer of the processing device is programmed to execute the functions as discussed below. The storage devices store processing results and control programs that are run by the processing device. The RAM stores statuses of operational flags and various control data. The ROM stores the control programs for various operations. It will be apparent to those skilled in the art from this disclosure that the precise structure and algorithms for processing device can be any combination of hardware and software that will carry out the functions of the present application.

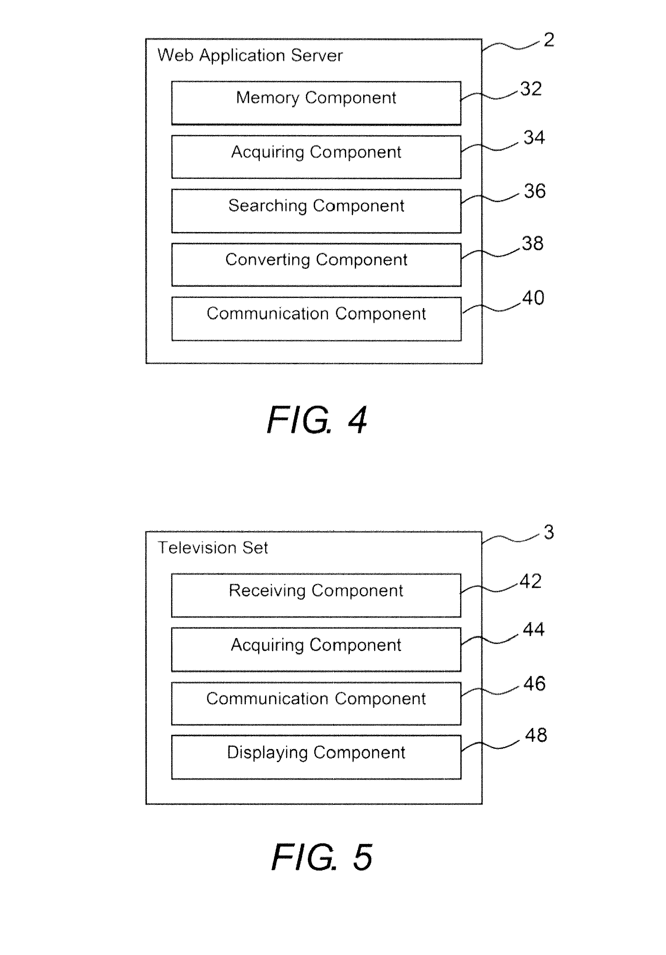

As illustrated in FIGS. 4, the web application server 2 basically includes a memory component 32 (e.g., a memory or a storage device), an acquiring component 34, a searching component 36, a converting component 38 and a communication component 40 (e.g., a sending component). In particular, the acquiring component 34, the searching component 36 and a converting component 38 can be formed of the processing device, such as a central processing unit. The communication component 40 can be formed of a communication unit that can be in communication with the Internet 5. Of course, the web application server 2 can include other components that are provided to a conventional server. However, the description of these conventional components will be omitted for the sake of brevity. Furthermore, as illustrated in FIG. 5, the television set 3 basically includes a receiving component 42 (e.g., a tuner), an acquiring component 44, a communication component 46 (e.g., a sending component), a displaying component 48 (e.g., a screen). In particular, the acquiring component 44 can be formed of the processing device, such as a central processing unit. The communication component 46 can be formed of a communication unit that can be in communication with the Internet 5. Of course, the television set 3 can include other components that are provided to a conventional server. However, the description of these conventional components will be omitted for the sake of brevity. The configurations of web application server 2 and the television set 3 will be further discussed in detail below.

With the coupon distribution system, as will be discussed in detail below, when a coupon information request (e.g., a coupon request) is sent from the television set 3 (e.g., the communication component 46) to the web application server 2, the web application server 2 (e.g., the communication component 40) sends back a coupon information response (e.g., a QR code transmission ("QR code" is a registered trademark) with coupon information) to the television set 3.

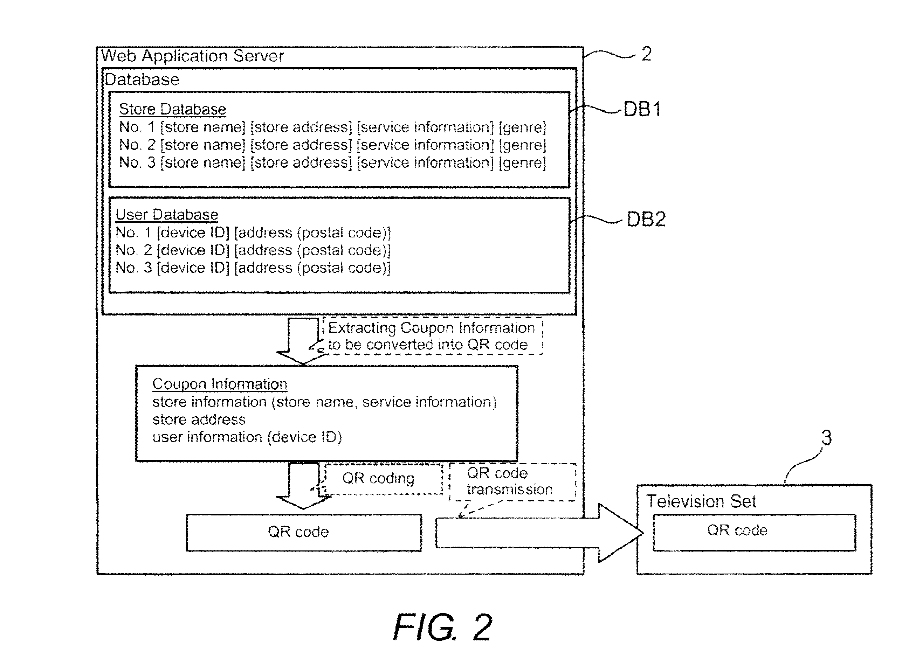

As illustrated in FIG. 2, the web application server 2 performs the coupon information response to the television set 3. As shown in FIG. 2, the web application server 2 (e.g., the memory component 32) has two types of databases. The first database is a store database DB 1 for managing coupons issued by a plurality of stores, such as the coupon providing stores 1 and 4, in association with locations of the stores, while the second database is a user database DB2 for managing user information (or utilization information) of users or devices, such as the television set 3.

The information in these databases is as follows. In particular, the content of the store database DB1 includes, for each store, a store name, a store address (e.g., a store location), service information and a genre (e.g., store related information). The store name, the store address, the service information and the genre form store information for each store. Thus, the store database DB1 has the following structure:
No. I [store name] [store address] [service information] [genre]
No. 2 [store name] [store address] [service information] [genre]
No. 3 [store name] [store address] [service information] [genre]
   In this store database DB1, three of the stores (i.e., No. 1 to No. 3) are registered. Two of them correspond to the coupon providing stores 1 and 4, for example. Of course, it will be apparent to those skilled in the art from this disclosure that more than three stores can be registered in the store database DB1.

On the other hand, the content of the user database DB2 includes, for each device (i.e., for each user), a device ID and an address (postal code) (e.g., a device location). The device ID and the address (postal code) form the user information for each device. Thus, the user database DB2 has the following structure:
No. 1 [device ID] [address (postal code)]
No. 2 [device ID] [address (postal code)]
No. 3 [device ID] [address (postal code)]
   The postal code corresponds to a postal number code, postcode, zip code, or the like. In this user database DB2, three of the devices (i.e., No. 1 to No. 3) are registered. One of them corresponds to the television set 3, for example. Of course, it will be apparent to those skilled in the art from this disclosure that more than three devices can be registered in the user database DB2.

With this coupon distribution system, the web application server 2 (e.g., memory component 32) stores the store database DB1 and the user database DB2. In the coupon distribution system, two applications are executed. The first application is a store management application. This store management application allows various stores to register and update the store information to the store database DB1 via a website. This website can be provided by the web application server 2. The second application is a television application. This television application allows the users to register and update the user information from the devices, such as the television set 3, to the user database DB2. Furthermore, the web application server 2 (e.g., the searching component 36) has a function of extracting information that matches a keyword or a genre in a desired locale or region (i.e., extracting information for QR coding). Moreover, the web application server 2 (e.g., the converting component 38) has a function of producing (i.e., QR encoding) and issuing QR code for coupon information (i.e., QR code transmission). Meanwhile, the devices, such as the television set 3 (e.g., the communication component 46), have a function of sending out the coupon information request and receiving the QR code. Furthermore, the devices, such as the television set 3 (e.g., the displaying component 48) have a function of displaying the QR code.

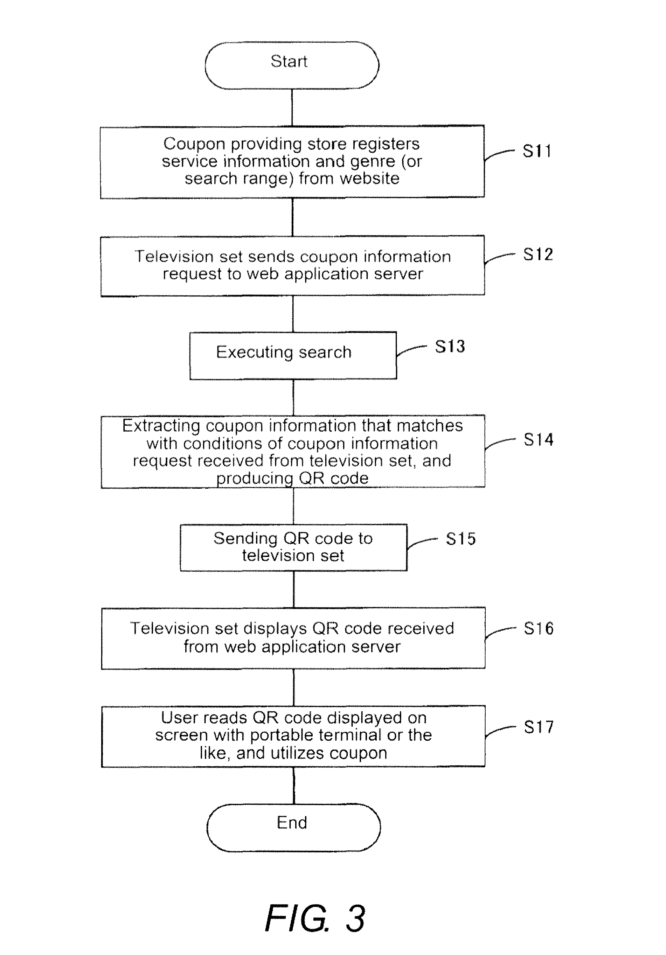

Referring now to FIG. 3, the coupon distribution with the coupon distribution system will be described in detail.

As shown in step S11, the stores, such as the coupon providing stores 1 and 4, which provide coupons, register the store information from the website in advance. In particular, the coupon providing stores register their service content, such as the service information, and the genre (or search range, keyword, etc.) of the store information from the website in advance.

If the user of the television set 3 wishes for a coupon related to a television program while watching the television programs as usual, then the coupon information request is sent from the television set 3 (e.g., the communication component 46) to the web application server 2 as shown in step S12. For example, the coupon information request is sent from the television set 3 via the Internet 5 by operating, for example, a remote (not shown) of the television set 3. Here, the coupon information request includes a device ID (e.g., a terminal ID), a search range, and a search condition.

Specifically, the device ID in the coupon information request is an identifier registered in each device. In this case, for example, the device ID is the identifier indicative of the television set 3. The user database DB2 is referred to based on the device ID, thereby searching for an address (postal code) corresponding to the device ID. As mentioned above, the device ID and the address (postal code) are registered in association with each other in the user database DB2. The address (postal code) indicates an address where each device is installed, and is registered ahead of time in each device. In particular, the television set 3 is equipped with a channel setting program, and reception location information is set for channel setting in the television set 3. When the user information of the television set 3 is registered in the user database DB2, the web application server 2 automatically acquires the address (postal code) of the television set 3 from this location setting (i.e., the reception location information) in the television set 3, and registers the address (postal code) in the user database DB2. Of course, it will be apparent to those skilled in the art from this disclosure that the user can manually set the address (postal code) in the user database DB2 by operating the television set 3, for example, instead of automatically providing the address (postal code) to the user database DB2.

The search range in the coupon information request indicates an area around a location (e.g., a device location) in which each device, such as the television set 3, is installed. In particular, the search range indicates an area over which the user of the television set 3 wishes for the coupons. The search range is set ahead of time. For example, one user wishes for coupons for services in a close neighborhood, while another user wishes for coupons for services in a larger area, such as in one county. Moreover, further another user wishes for coupons for services over a fairly large area, such as a multi-county region (e.g., Kinki region). The more of these latter users there are, the more coupons will be involved and the more varied they will tend to be. Thus, the search range will better reflect the selection or intention of the user who wishes for the coupons.

The search condition in the coupon information specifies how the coupons will be selected in relation to the television program that is being watched. In particular, sending the search condition as the coupon information request corresponds to sending related information (e.g., program related information) of the television program that is being watched. The television set 3 (e.g., the acquiring component 44) acquires the related information form program information of the television program that is being watched while the television set 3 (e.g., the receiving component 42) receives the television program. In the illustrated embodiment, two search methods can be specified by in the television set 3. One search method is a genre search, while the other search method is a keyword search.

When the genre search is conducted, a function of searching and displaying coupons related to the genre of the television program that is being watched will be executed in the coupon distribution system. The coupons related to the television program are searched and provided by the web application server 2 in response to providing genre information (e.g., the program related information) indicative of the genre of the television program from the television set 3 to the web application server 2. In other words, in the case of the genre search, the genre of the television program that is being watched is sent in the search condition of the coupon information request from the television set 3 to the web application server 2. With this genre search, the "genre" of the television program and "provided coupons" are associated with one another ahead of time. For example, the following associations are set in advance.

| "Genre" | "Provided Coupons" |
|---|---|
| movie | movie ticket coupons |
| sports etc. | health club coupons |

For example, these associations can be registered in the web application server 2 in advance. Alternatively, these associations can also be reflected by the store database DB1. In other words, the "provided coupons" can merely correspond to the service information in the store database DB1.

When the keyword search is conducted, a function of searching and displaying coupons related to the keywords that are preset by the user will be executed in the coupon distribution system. More specifically, when the user presets the keywords to the television set 3 ahead of time, the television set 3 will send the coupon information request whenever one of the preset keywords is included in program information or the title of the television program that is being watched. The program information or the title of the television program can be acquired, for example, by the television broadcast or through the Internet 5 in a conventional manner. In the keyword search, the genre of the television program is sent from the television set 3 to the web application server 2 as the search condition of the coupon information request. However, alternatively, the keyword itself can be sent instead. In this case, the keywords are preset in the store database DB 1 stored in the web application server 2. Furthermore, in this case, upon receiving the coupon information request, the web application server 2 sends back the coupon information corresponding to the keyword.

As shown in step S13, in response to the web application server 2 (e.g., the communication component 40) receiving the coupon information request from the television set 3 via the Internet 5, the web application server 2 (e.g., the acquiring component 34) acquires the device ID of the television set 3, the search range and the search condition from the coupon information request. Then, the web application server 2 (e.g., the searching component 36) executes a search of the coupon information based on the coupon information request. The search is narrowed down by first searching the user database DB2 and then searching the store database DB 1. Specifically, when the coupon information request is received from the television set 3, the address (e.g., the device location) thereof is searched for by referring to the user database DB2 based on the device ID of the television set 3 in the coupon information request. Then, the coupon providing stores are searched for by referring to the store database DB1 based on the search range in the coupon information request and the address that has been searched.

Along with narrowing down the coupon providing stores, another search is conducted by the web application server 2 based on the search condition in the coupon information request, i.e., based on whether the user specified the genre search or the keyword search. More specifically, in step S 13, the web application server 2 searches for a genre that matches with the genre specified by the search condition of the coupon information request in the genre of the store database DB1. The same procedure can be applied to the keyword search. Thus, the detailed procedure for the keyword search will be omitted for the sake of brevity. The search condition corresponds to a coupon distribution condition of the present application.

Then, in step S 14, the coupon information that matches with the coupon information request from the television set 3 is extracted, and the QR code is produced. The coupon information includes at least part of the store information (e.g., the store name and the service information), the store address (e.g., store reception location information), and at least part of the user information (e.g., the device ID). The store name, the service information and the store address can be retrieved from the store database DB1, for example, while the device ID can be retrieved from the coupon information request or the user database DB2, for example. The QR code is produced such that the QR code includes all of this coupon information, The QR code is an example of a readable code image of the present application. This code image (i.e., the QR code) can be readable and decodable with normal mobile telephones (or multipurpose portable terminals, smart phones, etc) to decode the coupon information of the QR code.

In step S15, the web application server 2 sends this QR code to the television set 3 that has been sent the coupon information request. In step S 16, the television set 3 displays the QR code that has been received from the web application server 2. That is, the QR code is displayed on a screen of the television set 3 such that the user of the television set 3 can see the QR code. In step S17, the user reads the QR code that has been displayed on the screen of the television set 3 with a mobile telephone or other such multipurpose portable terminal to retrieve the coupon information contained in the QR code to use the coupon.

### SECOND EMBODIMENT

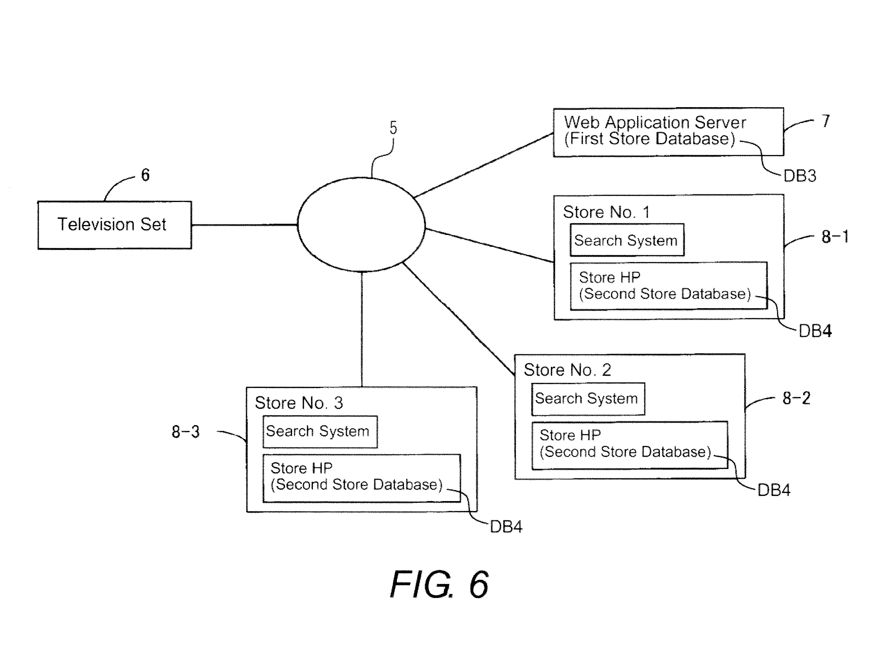

Referring now to FIG. 6, a coupon distribution system in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

The coupon distribution system in accordance with the second embodiment is identical to the coupon distribution system in accordance with the first embodiment, except for the store database DB1 is split into two parts. In view of the similarity between the first and second embodiments, the coupon distribution system in accordance with the second embodiment will not be discussed in detail for the sake of brevity.

Referring to FIG. 6, the coupon distribution system basically includes a television set 6, a web application server 7 and a plurality of (three in this embodiment) coupon providing stores 8-1, 8-2 and 8-3. Of course, it will be apparent to those skilled in the art from this disclosure that a plurality of television sets can be connected to the Internet 5. Moreover, of course, it will be apparent to those skilled in the art from this disclosure that more than three coupon providing stores can be connected to the Internet 5. In the coupon distribution system, the web application server 7 has a first store database DB3, while the coupon providing stores 8-1, 8-2 and 8-3 each have a search system and a store home page (HP) with a second store database DB4.

The first store database DB3 in the web application server 7 has, for each store, a store name and a store address (e.g., a store location). Thus, the first store database DB3 has the following structure:
No. 1 [store name] [store address]
No. 2 [store name] [store address]
No. 3 [store name] [store address]
   In this structure, the store names are associated with the store addresses, respectively. Thus, the store name can be found based on the store address, and vice versa.

The second store databases DB4 in the coupon providing stores 8-1, 8-2 and 8-3 are specific to the coupon providing stores 8-1, 8-2 and 8-3, respectively. Each of the second store databases DB4 has service information and a genre (e.g., store related information) that are associated with each other. Thus, the second store database DB4 of the coupon providing store 8-1 (e.g., store No. 1) has the following structure:

### [service information] [genre]

The second store database DB4 of the coupon providing store 8-2 (e.g., store No. 2) has the following structure:

### [service information] [genre]

The second store database DB4 of the coupon providing store 8-3 (e.g., store No. 3) has the following structure:

### [service information] [genre]

With these separated store databases (i.e., the first and second store databases DB3 and DB4), the television set 6 first searches in the first store database DB3 of the web application server 7, and then the television set 6 individually searches in the home pages with the second store databases DB4 of the coupon providing stores 8-1, 8-2 and 8-3.

The web application server 7 has the user database DB2 for managing the user information (or utilization information) of the users or the television sets in the same manner as the web application server 2 in accordance with the first embodiment. Thus, the user database DB2 has the following structure:
No. 1 [device ID] [address (postal code)]
No. 2 [device ID] [address (postal code)]
No. 3 [device ID] [address (postal code)]
The user database DB2 of the web application server 7 is identical to the user database DB2 of the web application server 2. Thus, detailed description of the user database DB2 of the web application server 7 will be omitted for the sake of brevity.

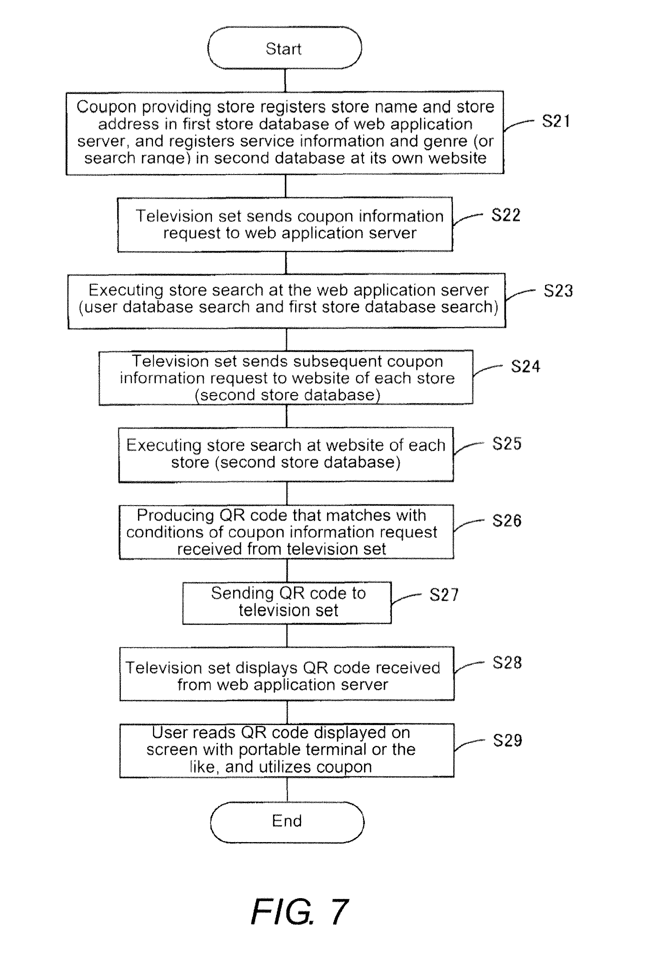

Referring now to FIG. 7, the coupon distribution with the coupon distribution system will be described in detail.

As shown in step S21, the coupon providing stores 8-1, 8-2 and 8-3, which provide coupons, register the store information, respectively. In particular, the coupon providing stores 8-1, 8-2 and 8-3 register the store names and the store addresses in the first store database DB3 of the web application server 7, respectively, in the same manner as described in the first embodiment. Furthermore, the coupon providing stores 8-1, 8-2 and 8-3 register their service content, such as the service information and the genre (or search range, keyword, etc.) of the store information in the second store databases DB4 in their own home pages (or websites), respectively.

In step S22, the user sends a coupon information request (e.g., a first coupon request) from the television set 6 to the web application server 7 via the Internet 5. In the illustrated embodiment, the coupon information request includes only the search range and the device ID that are stored in the television set 6. In other words, the coupon information request does not include the service information or the genre.

Then, the web application server 7 executes a store search in step S23. In particular, the web application server 7 executes a user database search and a first store database search. In this store search, first the address where the television set 6 is installed is searched for by referring to the user database DB2 based on the device ID of the television set 6 in the coupon information request. Then, the first store database DB3 is referred to based on the installation address that was searched, and then corresponding store names are extracted using the search range and the installation address of the television set 6. Specifically, the store addresses corresponding to the installation address are extracted from the first store database DB3 by searching for the store addresses within the search range around the installation address, and then the store names corresponding to the store addresses that have been extracted are extracted. After this, the extracted store names are sent to the television set 6. Of course, it will be apparent to those skilled in the art from this disclosure that only one store name can be extracted during the store search.

Furthermore, the coupon request still continues. Specifically, in step S24, subsequent coupon information requests (e.g., second coupon requests) are sent from the television set 6 to the websites of the coupon providing stores with the second store databases DB4. Since the store names are narrowed down by referring to the first store database DB3, the television set 6 sends the subsequent coupon information requests with search conditions only to the coupon providing stores corresponding to the extracted store names that are extracted by the web application server 7. For example, if the store names of the coupon providing stores 8-1 and 8-2 are extracted in step S23, then the subsequent coupon information requests are only sent to the coupon providing stores 8-1 and 8-2. The search conditions are identical to the search condition in accordance with the first embodiment. The search conditions each indicate the genre (or the keyword) as discussed above.

In step S25, the store searches are further executed at the websites of the coupon providing stores corresponding to the extracted store names by referring to the second store databases DB4 based on the search conditions in the subsequent coupon information requests, respectively. For example, if the store names of the coupon providing stores 8-1 and 8-2 are extracted in step S23, then the store searches are conducted at the websites of the coupon providing stores 8-1 and 8-2.

The second store database DB4 of each of the coupon providing stores has a database structure that includes [service information] and [genre]. Thus, in step S 25, the service information corresponding to the genre designated by the search condition in each of the subsequent coupon information requests is extracted at each of the coupon providing stores. Then, for example, the coupon providing stores can sent the extracted service information to the web application server 7 with the store names of the coupon providing stores, respectively.

After this, in step S26, the web application server 7 produces the QR code matching with the coupon information request and the subsequent coupon information requests sent from the television set 6. For example, the web application server 7 can produce coupon information with the store name, the service information, the store address and the user information (e.g., the device ID). The store name and the service information can be acquired in step S25. The store address can be acquired from the first store database DB3 based on the store name that has been acquired in step S25. The device ID can be retrieved from the user database DB2. The QR code is produced such that the QR code includes all of this coupon information. The QR code is an example of a readable code image of the present application. This code image (i.e., the QR code) can be readable and decodable with normal mobile telephones (or multipurpose portable terminals, smart phones, etc) to decode the coupon information of the QR code.

In step S27, the web application server 7 sends this QR code to the television set 6. In step S28, the television set 6 displays the QR code that has been received from the web application server 7. That is, the QR code is displayed on a screen of the television set 6 such that the user of the television set 6 can see the QR code. This display of the QR code corresponds to a distribution of the coupon.

In step S29, the user reads the QR code that has been displayed on the screen of the television set 6 with a mobile telephone or other such multipurpose portable terminal to retrieve the coupon information contained in the QR code to use the coupon.

In the illustrated embodiment, in step S25, the coupon providing stores can sent the extracted service information to the web application server 7 with the store names of the coupon providing stores, respectively. Alternatively, the extracted service information can be merely sent back to the television set 6 from the coupon providing stores in step S25. In this case, the web application server 7 can merely produces the QR codes for the stores that match with the coupon information request. Then, the user can select some of the QR codes corresponding to the extracted service information sent from the coupon providing stores, and decode the QR code.

With the coupon distribution system of the present application, the television sets, such as the television set 3 (or 6) (e.g., a terminal), are able to receive television broadcasts and can be connected to the Internet 5. The web application server 2 (or 7) can be accessed via the Internet 5. The television set 3 (or 6) acquires the genre (e.g., specific related information) registered to the television program that is being received, and sends the search condition (or the search range) and the device ID (e.g., the terminal ID) as the coupon information request (e.g., the coupon request) to the web application server 2 (or 7) via the Internet 5. The web application server 2 (or 7) has the user database DB2 that includes, for each device, the device ID as an identifier of each device and the address (postal code) (e.g., reception location information) about the reception location of each device. The web application server 2 (or 7) acquires the search condition (or the search range) and the device ID in the coupon information request in response to receiving the coupon information request from the television set 3 (or 6) via the Internet 5. The web application server 2 (or 7) refers to the user database DB2 to acquire the address (postal code) of the television set 3 (or 6) based on the device ID of the television set 3 (or 6). The web application server 2 (or 7) subjecting the address (postal code) and the service information (e.g., store service information) that matches with the search condition (e.g., coupon distribution condition) to image conversion into the QR code (e.g., the code image) that is decodable by the multipurpose portable terminal. The web application server 2 (or 7) sends this QR code to the television set 3 (or 6) that has sent the coupon information request. The television set 3 (or 6) displays the QR code on the screen upon receipt of the QR code.

With this arrangement, the user or viewer of the television set 3 (or 6) acquires the genre or keyword (e.g., specific related information) registered to the television program that is being received, and sends the search condition with the genre (or keyword) (or the search range) and the device ID as the coupon information request to the web application server 2 via the Internet 5.

Meanwhile, the web application server 2 (or 7), upon receiving the coupon information request from the television set 3 via the Internet 5, acquires the search condition (or the search range) and the device ID from the coupon information request. The web application server 2 (or 7) acquires the address (postal code) based on the device ID by referring to the user database DB2. The web application server 2 subjects the service information that matches with the search condition to image conversion into the QR code that is decodable by the multipurpose portable terminal. The web application server 2 sends the QR code to the television set 3 that sent the coupon information request.

Upon receiving the QR code, the television set 3 (or 6) displays the image of the QR code on the screen. Thus, the television set 3 (or 6), which is connected to the Internet 5, can search for coupons related to the viewing locale and notify the user of these coupons.

With the coupon distribution system, the code image (i.e., QR code) is displayed on the screen of the television set 3 (or 6). The code image is obtained by encoding the coupon information related to the television program that is being viewed. The user can utilize the coupons in a familiar manner by reading this code image with the multipurpose portable terminal.

Furthermore, since the coupon information for the viewing locale is thus provided while the user is watching the television program, the user can obtain the coupon information of interest while watching the television program. Also, the user can receive the coupon information related to the genre of the television program that is being viewed. This simplifies searching for coupons on a portable terminal or the like. Furthermore, the coupon providing stores that provide the coupons can be more successful at disseminating their coupon information than in the past.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

It should be apparent to those skilled in the art that the present invention is not limited to the embodiments given above, but the following modification can be made without departing from the scope of the invention: suitably combining and changing the mutually interchangeable members, configurations, and so forth disclosed in the above embodiments; suitably substituting or combining and changing the interchangeable member, configuration, and so forth disclosed in the above embodiments with those that are not disclosed in the above embodiment but are conventionally known; and suitably substituting or combining and changing the member, configuration, and so forth that are not disclosed in the above embodiments with those that are apparent modifications to those skilled in the art based on the conventionally known technique as replacements for the member, configuration, and so forth disclosed in the above embodiment.

## Claims

1. A coupon distribution system comprising:
a television device configured to receive a television program, the television device being further configured to acquire program related information of the television program that is being received, the television device being further configured to send the program related information and a device ID of the television device via a network; and
a server configured to be connected to the television device via the network, the server having a user database that stores for each device a device ID and a device location,
the server being further configured to acquire the device ID of the television device via the network, the server being further configured to search in the user database for the device location of the television device based on the device ID of the television device, the server being further configured to convert service information of a coupon providing store into a code image with the coupon providing store being selected based on the device location and the program related information, the server being further configured to send the code image to the television device such that the television device displays the code image on a screen of the television device in response to receiving the code image from the server.

2. The coupon distribution system according to claim 1, wherein
the television device is further configured to send a coupon request with the program related information and the device ID, and
the server is further configured to acquire the program related information and the device ID of the coupon request from the television device via the network, the server being further configured to search for the service information of the coupon providing store based on the program related information of the coupon request and the device location of the television device.

3. The coupon distribution system according to claim 2, wherein
the server further has a store database that stores for each store a store location, store related information and service information, the server being further configured to search in the store database for the service information of the coupon providing store based on the program related information of the coupon request and the device location of the television device in response to receiving the coupon request from the television device via the network.

4. The coupon distribution system according to claim 3, wherein
the user database has an identifier of each device as the device ID, and a postal code as the device location, and
the store database has a store name of each store, a store address as the store location, a genre as the store related information, and the service information.

5. The coupon distribution system according to claim 4, wherein
the server further converts the store name, the store address, the device ID and the service information into the code image.

6. The coupon distribution system according to claim 1, wherein
the server further has a first store database that stores for each store a store location, with each store further having a second store database that stores store related information and service information,
the server is further configured to search in the first store database for the coupon providing store based on the device location of the television device in response to a first coupon request from the television device via the network, and
the second store database of the coupon providing store is searched for the service information based on the program related information.

7. The coupon distribution system according to claim 6, wherein
the second store database of each store is provided to a website of each store, the second store database of the website of the coupon providing store being further searched for the service information based on the program related information.

8. The coupon distribution system according to any of claims 1 to 7, wherein the television device is configured to acquire the program related information from program information of the television program that is being received.

9. The coupon distribution system according to claim 8, wherein
the television device is configured to register a keyword, and
the television device is further configured to acquire the program related information from the program information in response to the program information including the keyword.

10. The coupon distribution system according to any of claims 1 to 9, wherein the code image includes a QR code.

11. A television device comprising:
a receiving component configured to receive a television program;
an acquiring component configured to acquire program related information of the television program that is being received;
a sending component configured to send the program related information and a device ID of the television device via a network; and
a displaying component configured to display a code image indicative of service information of a coupon providing store in response to receiving the code image from a server, with the coupon providing store being selected based on the device ID and the program related information.

12. A server comprising:
a memory component configured to store a user database that stores for each device a device ID and a device location;
an acquiring component configured to acquire a device ID of a television device via a network;
a searching component configured to search in the user database for the device location of the television device based on the device ID of the television device;
a converting component configured to convert service information of a coupon providing store into a code image with the coupon providing store being selected based on the device location and program related information of a television program; and
a sending component configured to send the code image to the television device such that the television device displays the code image on a screen of the television device in response to receiving the code image from the server.
